(19) Europäisches Patentamt / European Patent Office / Office européen des brevets

(11) **EP 3 194 320 B1**

(12) **FASCICULE DE BREVET EUROPEEN**

(45) Date de publication et mention
de la délivrance du brevet:
**23.10.2019 Bulletin 2019/43**

(21) Numéro de dépôt: **15750649.4**

(22) Date de dépôt: **27.07.2015**

(51) Int Cl.:
**B66C 13/02** *(2006.01)*     **E21B 19/00** *(2006.01)*
**E21B 19/09** *(2006.01)*     **B60G 11/14** *(2006.01)*

(86) Numéro de dépôt international:
**PCT/EP2015/067141**

(87) Numéro de publication internationale:
**WO 2016/041671 (24.03.2016 Gazette 2016/12)**

(54) **SYSTEME DE CONTROLE DU DEPLACEMENT D'UNE CHARGE**

SYSTEM ZUR KONTROLLE DER BEWEGUNG EINER LAST

SYSTEM FOR CONTROLLING THE MOVEMENT OF A LOAD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.09.2014 FR 1458698
03.04.2015 FR 1552883**

(43) Date de publication de la demande:
**26.07.2017 Bulletin 2017/30**

(73) Titulaire: **IFP Energies nouvelles
92500 Rueil-Malmaison (FR)**

(72) Inventeur: **AMAUDRIC DU CHAFFAUT, Benoît
F-69130 Ecully (FR)**

(74) Mandataire: **IFP Energies nouvelles
Département Propriété Industrielle
Rond Point de l'échangeur de Solaize
BP3
69360 Solaize (FR)**

(56) Documents cités:
**FR-A1- 2 025 186**     **FR-A1- 2 193 775**
**US-A- 2 264 070**     **US-A- 5 520 369**

**Description**

La présente invention fait partie du domaine des liaisons mécaniques entre deux éléments, ou ensembles d'éléments, dont les positions relatives varient entre des limites déterminées par l'organe de liaison, et dans lequel on souhaite contrôler l'effort de liaison entre les deux éléments pour le rendre pratiquement indépendant des positions relatives desdits éléments. En particulier, on recherche à maintenir sensiblement constant l'effort de liaison de façon à pouvoir appliquer la présente invention dans le domaine du levage, ou de l'amortissement de charge.

L'invention comporte une liaison particulière entre deux objets ou ensembles mécaniques, l'un étant appelé « support », et l'autre « charge ». Le support a pour fonction de limiter le déplacement de la charge quand celle-ci est soumise à différentes sollicitations, comme son poids propre. Les liaisons habituellement rencontrées entre un support et une charge sont : soit rigides, soit déformables. Les liaisons déformables sont le plus souvent élastiques, c'est-à-dire que l'effort de liaison dépend de l'élongation de l'organe de liaison, et sont alors appelées suspensions. Par exemple, lorsqu'une automobile (charge) se déplace à l'aide de ses roues (support) sur un sol irrégulier, les moyens de suspension, en se déformant, permettent aux roues de suivre les irrégularités du sol sans que l'automobile soit trop secouée. Cependant, la déformation des amortisseurs entraine une variation de l'effort de suspension, et l'automobile, dont la masse reste *a priori* inchangée, est donc soumise à des accélérations verticales plus ou moins confortables. Mais ces variations d'efforts de suspension restent indispensables par la fonction de rappel élastique qu'elles procurent, fonction incontournable en matière de suspension où la charge peut varier très sensiblement du fait de phénomènes dynamiques.

Un domaine où les problèmes de suspension sont un peu différents est celui des installations marines flottantes. En effet, dès que la profondeur d'eau est trop importante pour poser l'installation sur le fond, le support, navire ou plate-forme, est obligatoirement flottant et se trouve donc soumis à différents mouvements incontrôlables, notamment le pilonnement vertical dû à la houle. Une charge peut être simplement pendue au flotteur, et l'accompagner dans ses mouvements, les seules variations de l'effort de suspension résultent alors éventuellement de son inertie ou de la résistance opposée par l'eau à ses mouvements verticaux. La charge peut aussi être plus ou moins liée à un point fixe au fond de la mer. L'effort de suspension doit alors être aussi constant que possible quelle que soit la position du flotteur, sous peine de dommages coûteux aux éléments les plus fragiles de la charge. Deux types de solutions sont alors possibles :

1. Soit l'opération est limitée dans le temps, et la charge n'est pas trop importante. C'est le cas par exemple de la pose d'une charge de quelques tonnes au fond de la mer depuis un navire soumis à une forte houle. La solution la plus efficace est un asservissement dynamique du système de levage qui apporte, ou dissipe, l'énergie nécessaire pour maintenir la charge sensiblement immobile quand le support se déplace. On parle alors de « compensation active », et les performances en tolérance de déplacement de la charge peuvent être centimétriques quand les déplacements du support sont métriques.

2. Soit la charge est très élevée, permanente ou d'une durée d'opération trop longue. Le coût de l'énergie nécessaire à une compensation active devient alors prohibitif. C'est le cas des conduites verticales (*risers*) reliant une tête de puits sous-marine à une plate-forme flottante pour une durée de 10 à 20 ans, ou d'un train de tiges partiellement posé au fond du puits en cours de forage par un navire de forage pendant plusieurs jours ou plusieurs semaines. La solution classique, dite de « compensation passive », est constituée le plus souvent de vérins hydropneumatiques, autrement dit de ressorts à air. Ces systèmes ne consomment pas d'énergie, permettent de grands déplacements verticaux (plusieurs mètres), ont des caractéristiques (courbes effort-élongation) presque linéaires, et autorisent une grande variété de situations en fonction des volumes et de la pression des réservoirs d'air. Les performances se mesurent en variation de l'effort de suspension en fonction du déplacement, et dépendent fortement des quantités d'air sous haute pression disponibles. Ainsi, pour compenser un train de tiges d'environ 300 tonnes en cours de forage sur un navire soumis à une houle de 7 à 8 mètres d'amplitude (25 ft.), c'est-à-dire pour limiter la variation du poids sur l'outil à plus ou moins 2% du poids pendu total, soit environ 6 tonnes, il est nécessaire de disposer d'une réserve d'air à 200 bars de plus de 40 $m^3$.

Un système amélioré de compensation passive, destiné aux opérations de forage en mer, a été décrit dans le document US5520369 (FR 2575452), où le volume d'air nécessaire mentionné dans l'exemple ci-dessus a été réduit d'environ la moitié, grâce à la mise en oeuvre d'une géométrie particulière du chemin de câble du système de levage apportant un complément à l'effort des vérins hydropneumatiques.

En pratique, les navires et plates-formes affectés à des travaux sous-marins sont très souvent équipés des deux systèmes, et les utilisent de manière complémentaire et simultanée si nécessaire. Cependant, les capacités limitées et les coûts de fonctionnement des systèmes actifs incitent encore à rechercher plus de performance et de précision pour les systèmes passifs.

Un système de contrôle selon le préambule de la revendication 1 est connu du FR 2 025 186 A1.

La présente invention a pour objet d'améliorer encore plus ce concept de compensation passive, et d'élargir éventuellement son domaine d'application.

Ainsi, la présente invention concerne un système de contrôle du déplacement relatif d'une charge P comportant au moins un moyen d'amortissement principal d'action longitudinale de course C de déplacement, et ayant deux extrémités, l'une étant liée à un bâti et l'autre étant liée à la charge. Il comprend un dispositif de compensation comportant au moins un moyen d'amortissement secondaire d'action longitudinale ayant deux extrémités dont l'une est solidaire dudit bâti et l'autre est liée à l'extrémité du moyen d'amortissement principal liée à la charge, et ledit moyen d'amortissement secondaire est disposé de façon à ce qu'en un point de la course C, le moyen d'amortissement secondaire a une action de direction orthogonale à la direction dudit déplacement. L'une des extrémités du moyen d'amortissement secondaire d'action longitudinale est liée à l'extrémité du moyen d'amortissement principal liée à la charge par l'intermédiaire d'un système articulé.

Les moyens d'amortissement d'action longitudinale peuvent être du type vérin à ressort, hydraulique, ou pneumatique, ou une combinaison.

La course C peut correspondre au plus à la longueur de la tige dudit vérin.

Au moins deux moyens d'amortissement secondaire peuvent être disposés symétriquement par rapport à l'axe dudit moyen d'amortissement principal, de façon à ce que leurs actions s'annulent lorsqu'ils sont orthogonaux à l'axe du déplacement.

Le point d'orthogonalité peut être sensiblement au milieu de la course C.

Avantageusement, le système articulé comporte une bielle.

Selon un mode de réalisation le système articulé comporte une première bielle dont une première extrémité est fixée à l'extrémité du moyen d'amortissement principal liée à la charge, et une deuxième bielle comportant une première extrémité articulée par rapport à une deuxième extrémité de la première bielle et une deuxième extrémité articulée par rapport au bâti, l'articulation entre la première bielle et la deuxième bielle étant fixée à l'extrémité du moyen d'amortissement secondaire liée au moyen d'amortissement principal.

Alternativement, le système articulé comporte une première bielle dont une première extrémité est fixée à l'extrémité du moyen d'amortissement principal liée à la charge, et une deuxième bielle comportant une première extrémité articulée par rapport à une deuxième extrémité de la première bielle, une articulation par rapport au bâti, et une deuxième extrémité fixée à l'extrémité du moyen d'amortissement secondaire liée au moyen d'amortissement principal.

Le déplacement longitudinal du moyen d'amortissement secondaire peut se faire dans une direction fixe par rapport à la direction du déplacement du moyen d'amortissement principal.

L'invention concerne également un compensateur de pilonnement d'un support flottant, qui comporte un système de contrôle de déplacement de la charge selon la description ci-dessus.

Dans le compensateur, le moyen d'amortissement principal peut être constitué d'au moins deux vérins de direction sensiblement parallèle à la direction de la charge.

Les moyens d'amortissement principal et secondaire peuvent être constitués de vérins hydrauliques.

Les moyens d'amortissement principal et secondaire peuvent comporter des moyens hydropneumatiques indépendants pour régler leur pression hydraulique de façon indépendante.

La présente invention sera mieux comprise et ses avantages apparaîtront plus clairement à la lecture de la description qui suit, d'exemples de réalisation, nullement limitatifs, et illustrés par les figures ci-après annexées, et parmi lesquelles :

- les figures 1a-d représentent schématiquement un compensateur dit « isodyne » à ressorts de compression combinés en Té,
- les figures 2a-d représentent schématiquement un compensateur « isodyne » à ressorts et bielles combinés,
- la figure 3 montre un exemple de réponse d'un compensateur isodyne à 3 ressorts en Té,
- la figure 4 montre un exemple de réponse d'un compensateur isodyne à ressorts et bielles,
- les figures 5a-c représentent schématiquement un compensateur isodyne à vérins hydropneumatiques selon trois positions,
- la figure 6 montre un exemple de réponse d'un compensateur isodyne hydropneumatique à 3 vérins en Té,
- les figures 7a-c montrent un schéma de compensateur isodyne à vérins et bielles combinés,
- la figure 8 montre le comportement théorique d'un compensateur isodyne pneumatique à 3 vérins en Té pour différents cas de charge,
- la figure 9 montre le comportement théorique d'un compensateur isodyne pneumatique à vérins et bielles combinés,
- la figure 10 montre le comportement théorique d'un compensateur isodyne pneumatique à vérins et bielles pour différents cas de charge,
- les figures 11a, 11b et 11c montrent schématiquement l'application d'un compensateur isodyne hydropneumatique à un système de levage sur support flottant.
- les figures 12a, 12b, 12c et 12d représentent schématiquement un compensateur dit « isodyne » avec un système articulé comprenant deux bielles.

- les figure 13a, 13b, 13c et 13d représentent schématiquement une variante de réalisation du compensateur dit « isodyne » avec un système articulé comprenant deux bielles.
- la figure 14 illustre un paramétrage géométrique d'un système articulé comprenant deux bielles.
- les figures 15a à 15e représentent un compensateur de pilonnement comprenant un compensateur « isodyne » selon la variante de réalisation des figures 13.
- la figure 16 montre le comportement théorique d'un compensateur isodyne avec un système articulé comprenant deux bielles selon la variante de réalisation des figures 13.
- la figure 17 représente un compensateur isobare comprenant un compensateur isodyne selon l'invention.
- la figure 18 représente un système de suspension comprenant un compensateur isodyne selon l'invention.
- la figure 19 représente des courbes pour différentes raideurs, de la course en fonction de la portance pour une suspension équipé d'un compensateur « isodyne ».

Selon l'invention, l'effort produit par un ressort élastique est sensiblement proportionnel à sa déformation (flèche). Il varie donc plus ou moins linéairement entre deux valeurs extrêmes (minimum et maximum). La valeur constante recherchée (consigne) se situe entre ces extrêmes, par exemple au milieu. Pour maintenir la même valeur de consigne tout au long de la course (maximum - minimum), il est nécessaire d'ajouter ou de retrancher à l'effort du ressort principal un effort complémentaire, sensiblement proportionnel à l'écart de la flèche par rapport à la position correspondant à l'effort de consigne, ici par exemple au point milieu.

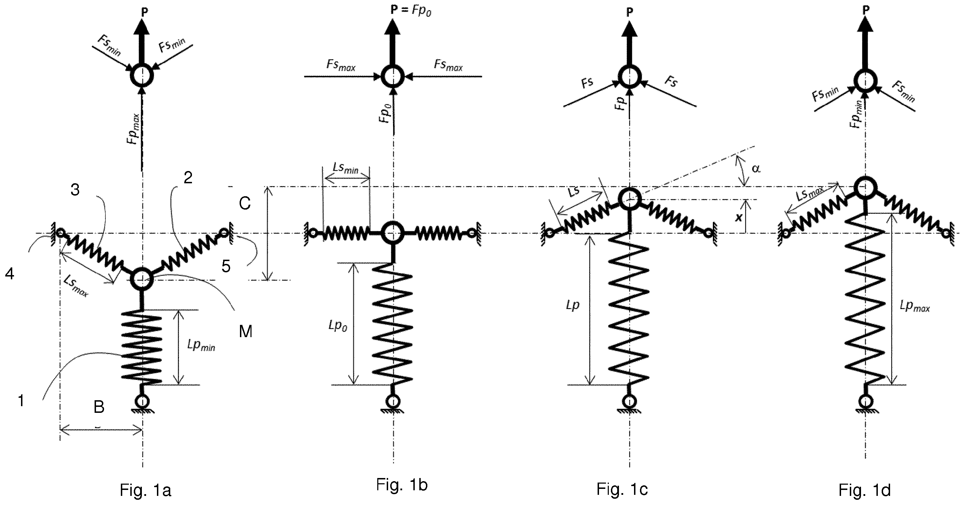

Une première solution qui ne fait pas partie de la présente invention consiste à disposer un ou plusieurs ressorts latéraux, d'axes concourants à l'une des extrémités du ressort principal, et perpendiculaires à l'axe du même ressort principal pour la valeur de consigne. Le principe d'une telle compensation sera mieux compris au moyen de l'exemple décrit dans la figure 1. Les quatre représentations 1a, 1b, 1c et 1d montrent le dispositif selon quatre positions du point mobile M. La figure 1b est dite du point de consigne, où aucune force résultante des ressorts auxiliaires, ou secondaires, latéraux agit sur le point M. Le ressort principal exerce la force $Fp_0$. Dans la suite de la description et pour tous les modes de réalisation décrits, le terme ressort désigne un moyen d'amortissement qui peut prendre la forme d'un vérin à ressort, d'un vérin hydraulique, d'un vérin pneumatique ou d'un système analogue ou d'une combinaison de tels vérins.

Le ressort de compression principal 1 procure l'effort $Fp_{max}$ quand il est comprimé à sa longueur minimale $Lp_{min}$ (figure 1a), et l'effort $Fp_{min}$ quand il est détendu à sa longueur maximale $Lp_{max}$ (figure 1d). A la moitié de la course C, l'effort vaut la valeur de consigne $Fp_0$ (figure 1b). La figure 1c illustre le fonctionnement en tout point de la course, repéré par la valeur $x$, cet effort est évalué par la formule :

$$F_p = F_{p0} - K_p x$$

où $K_p$ est la raideur du ressort principal.

Deux ressorts de compression 2, 3, identiques entre eux, dits secondaires, sont disposés symétriquement de part et d'autre de l'axe du ressort principal. Ils ont une extrémité mobile commune articulée sur l'extrémité mobile M du ressort principal 1, et leurs extrémités fixes 4, 5 sont articulées sur la même structure porteuse que celle du ressort principal. Ces ressorts sont alignés sur un axe perpendiculaire à celui du ressort principal quand ce dernier est à mi-course (figure 1b), à une distance B. Pour toutes les autres positions, la composante verticale de la résultante de leurs efforts vient s'ajouter à l'effort du ressort principal pour la moitié supérieure de la course, et s'en retrancher pour la moitié inférieure. Avec des notations analogues à celles du ressort principal, on peut alors écrire :

$$F_s = F_{smax} - K_s(L_s - L_{smin})$$

avec :

$$L_s - L_{smin} = \sqrt{B^2 + x^2} - B$$

L'effort résultant P, ou portance du système, s'écrit:

$$P = F_p + 2F_s \sin \propto$$

avec :

$$sin \propto= \frac{x}{\sqrt{B^2+x^2}}$$

Soit finalement :

$$P = F_{p0} - K_p x + \frac{2x}{\sqrt{x^2 + B^2}}\left[F_{smax} - K_s\left(\sqrt{B^2 + x^2} - B\right)\right]$$

La compensation « *isodyne* » (c'est-à-dire à effort constant) revient alors à choisir les grandeurs et paramètres permettant, sinon de vérifier l'équation ci-dessous, du moins d'en minimiser le premier terme sur la plus grande partie possible de la course.

$$\frac{2x}{\sqrt{x^2 + B^2}}\left[F_{smax} - K_s\left(\sqrt{B^2 + x^2} - B\right)\right] - K_p x = 0$$

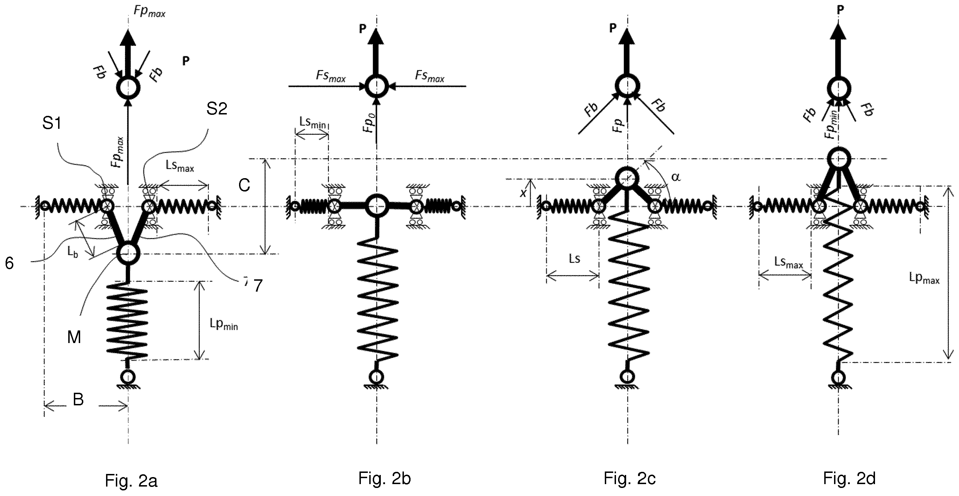

En pratique, les caractéristiques des ressorts sont imposées. Il reste cependant possible de leur ajouter des extensions ou raccords de longueurs adaptables, ou de les combiner en série ou en parallèle. La variable x est limitée par la course du ressort principal, et la grandeur B est déterminante pour l'inclinaison des ressorts secondaires.
Une méthode de détermination du jeu de paramètres peut être l'optimisation au moyen d'un modèle informatisé permettant d'explorer un grand nombre de combinaisons en visualisant rapidement le résultat.
Une deuxième solution, qui ne fait pas partie de l'invention, assez proche mécaniquement, consiste à intercaler des bielles articulées entre l'extrémité mobile M du ressort principal et celles des ressorts secondaires S1 et S2 (figure 2a). Il est alors nécessaire, pour l'équilibre des forces, de reprendre les efforts des pieds des bielles par un guidage approprié, perpendiculaire à l'axe du ressort principal. Les figures 2a-d illustrent cette solution où les ressorts secondaires, ou auxiliaires, ne s'inclinent pas par rapport à l'orthogonale à l'axe du ressort principal, mais se compriment et se détendent toujours dans le même axe grâce à l'action des bielles 6, 7 de longueur $L_b$, et des guidages appropriés.
Les efforts des ressorts s'écrivent:

$$F_p = F_{p0} - K_p x$$
$$F_s = F_{smax} - K_s(L_s - L_{smin})$$

avec :

$$L_s - L_{smin_s} = L_b - \sqrt{L_b^2 - x^2}$$

L'équilibre d'une bielle implique que les composantes horizontale $Fb_h$ et verticale $Fb_v$ de sa compression $Fb$ sont liées par :

$$F_{bv} = F_{bh}\, tg \propto$$

avec $Lb$ longueur de la bielle :

$$tg \propto= \frac{x}{\sqrt{L_b^2 - x^2}}$$

et en tout point de la course:

$$F_{bh} = F_s$$

et :

$$P = F_p + 2F_{bv}$$

L'expression de la portance P s'écrit alors :

$$P = F_{p0} - K_p x + \frac{2x}{\sqrt{L_b^2 - x^2}} \left[ F_{smax} - K_s \left( L_b - \sqrt{L_b^2 - x^2} \right) \right]$$

La compensation « isodyne » revient à vérifier l'équation :

$$\frac{2x}{\sqrt{L_b^2 - x^2}} \left[ F_{smax} - K_s \left( L_b - \sqrt{L_b^2 - x^2} \right) \right] - K_p x = 0$$

sur la plus grande partie possible de la course.
Pour $x$ non nul, cette dernière équation peut être simplifiée en :

$$K_s - \frac{K_p}{2} + \frac{F_{smax} - K_s L_b}{\sqrt{L_b^2 - x^2}} = 0$$

Il apparaît donc qu'il existe au moins une solution de compensation « parfaite », du moins dans le domaine statique : il s'agit de tout jeu de grandeurs et paramètres tels que :

$$K_s = \frac{K_p}{2} \quad \text{et} \quad L_b = \frac{F_{smax}}{K_s}$$

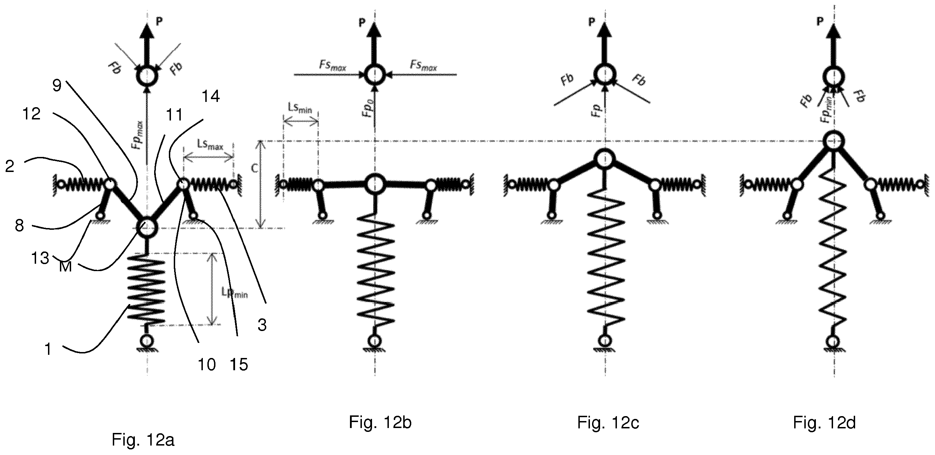

qui procurera une compensation isodyne théoriquement idéale sur la totalité de la course.
Une troisième solution, selon l'invention, assez proche mécaniquement de la deuxième solution, consiste à intercaler un système articulé entre l'extrémité mobile M du ressort principal et celles des ressorts secondaires S1 et S2 (figure 12a). Selon le mode de réalisation illustré aux figures 12a à 12d, chaque système articulé comprend deux bielles 8 et 9 et respectivement 10 et 11, articulées l'une par rapport à l'autre. La première bielle 9 (ou respectivement 11) comporte une extrémité fixée à l'extrémité du ressort principal 1 liée à la charge et une deuxième extrémité articulée par rapport à une première extrémité de la deuxième bielle 8 (ou 10). La deuxième bielle 8 (ou 10) comporte une extrémité articulée par rapport à la deuxième extrémité de la première bielle, et une deuxième extrémité articulée 13 (ou 15) par rapport au bâti. L'extrémité du ressort secondaire 2 (ou 3) lié au ressort principal est fixée à l'articulation 12 (ou 14) entre la première bielle 9 (ou 11) et la deuxième bielle 8 (ou 10). Les ressorts principal 1 et secondaire 2 de cette solution sont agencés et montés par rapport au bâti de manière identique à leur agencement et leur montage pour les première et deuxième solutions. Les figures 12a-d illustrent cette solution où les ressorts secondaires, ou auxiliaires, ne s'inclinent pas par rapport à l'orthogonale à l'axe du ressort principal, mais se compriment et se détendent toujours dans le même axe grâce à l'action des bielles 8, 9, 10 et 11 de longueur $L_b$, et des guidages appropriés.
Pour cette troisième solution, le système de bielles articulées est plus léger et plus simple à construire. Les trajectoires des pieds de bielles sont des arcs de cercle et les points d'application des efforts exercés par les ressorts secondaires peuvent être déplacés, ou être utilisés comme levier pour réduire l'encombrement ou abaisser le centre de gravité de l'ensemble.
Dans cette mise en oeuvre, on ne sortira pas du cadre de l'invention en changeant le nombre ou la disposition des ressorts secondaires, par exemple en remplaçant deux ressorts de compression antagonistes par un ressort de traction positionné entre les deux pieds des bielles, et produisant les mêmes efforts.

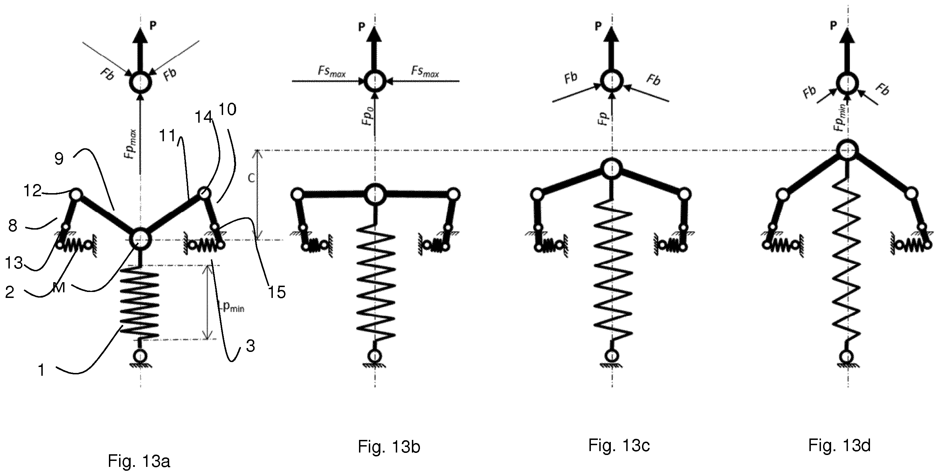

Une quatrième solution, assez proche mécaniquement de la troisième solution, consiste à intercaler un système articulé entre l'extrémité mobile M du ressort principal et celles des ressorts secondaires S1 et S2 (figure 13a). Selon le mode de réalisation illustré aux figures 13a à 13d, chaque système articulé comprend deux bielles 8 et 9 et respectivement 10 et 11, articulées l'une par rapport à l'autre. La première bielle 9 (ou 11) comporte une extrémité fixée à l'extrémité du ressort principal 1 liée à la charge et une deuxième extrémité articulée par rapport à une première extrémité de la deuxième bielle 8 (ou 10). La deuxième bielle 8 (ou 10) comporte une extrémité articulée par rapport à la deuxième extrémité de la première bielle, une articulation 13 (ou 15) par rapport au bâti, et une deuxième extrémité fixée au ressort secondaire 2 (ou 3). L'articulation 13 (ou 15) ne correspond pas à une extrémité de la bielle 8 (ou 10) et est disposée entre les deux extrémités. Les ressorts principal 1 et secondaire 2 de cette solution sont agencés et montés par rapport au bâti de manière identique à leur agencement et leur montage pour les première et deuxième solutions. Les figures 13a-d illustrent cette solution où les ressorts secondaires (ou auxiliaires) ne s'inclinent pas par rapport à l'orthogonale à l'axe du ressort principal, mais se compriment et se détendent toujours dans le même axe grâce à l'action des bielles 8, 9, 10 et 11 de longueur $L_b$, et des guidages appropriés.

Pour cette quatrième solution, le système de bielles articulées est plus léger et plus simple à construire. Les trajectoires des pieds de bielles sont des arcs de cercle et les points d'application des efforts exercés par les ressorts secondaires peuvent être déplacés, ou être utilisés comme leviers pour réduire l'encombrement ou abaisser le centre de gravité de l'ensemble.

Dans cette mise en oeuvre, on ne sortira pas du cadre de l'invention en changeant le nombre ou la disposition des ressorts secondaires, par exemple en remplaçant deux ressorts de compression antagonistes par un ressort de traction positionné entre les deux pieds des bielles, et produisant les mêmes efforts. Par exemple, il est envisageable de relier deux pieds de bielles symétriques par un ressort de traction transversal produisant les compressions recherchées dans les premières bielles 9 et 11. Les extrémités d'un tel ressort de traction peut se retrouver n'importe où sur les première et deuxième bielles, pourvu qu'elles soient symétriques par rapport à un axe vertical. Selon un autre exemple, on peut remplacer les ressorts de compression secondaires par un seul ressort reliant les deuxièmes extrémités des deuxièmes bielles. Selon une autre variante de réalisation, on peut remplacer les ressorts secondaires linéaires par des ressorts ou des barres de torsion ou de flexion contrôlant la rotation des bielles autour des articulations autour du bâti.

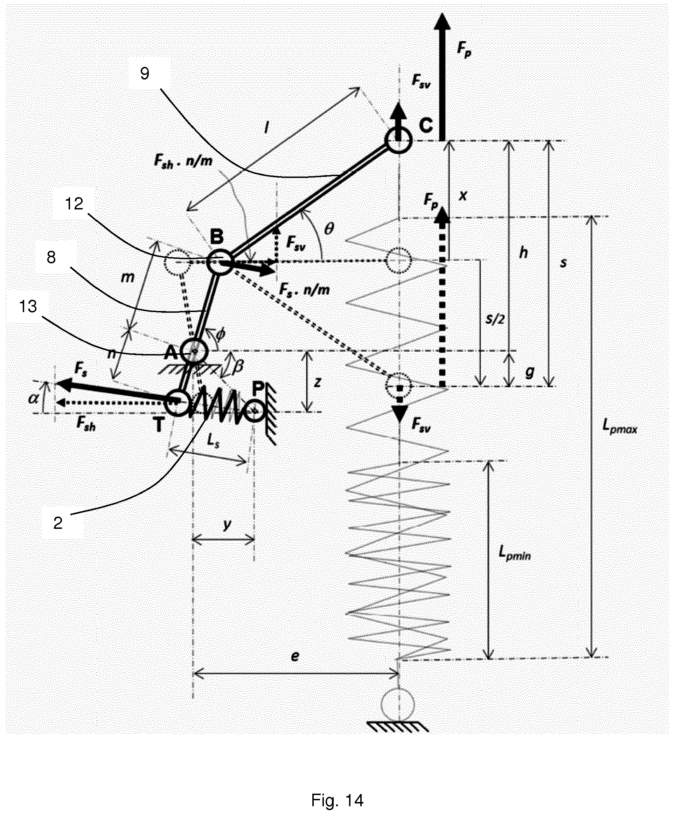

Pour les troisième et quatrième solutions, le calcul des efforts s'effectue comme pour les deux premières solutions et suivant le paramétrage géométrique de la figure 14. La figure 14 correspond à la solution des figures 13a-13d. L'effort du ressort principal vaut : $F_p = F_{p0} - K_p x$ où $F_{p0}$ est l'effort nominal à mi-course, et $K_p$ la raideur.

La composante horizontale $F_{sh}$ de l'effort $F_s$ produit par le ressort secondaire au point B procure, au point d'articulation 12 ou 14 des deux bielles, un effort horizontal opposé, d'intensité $F_{sh} * \frac{n}{m}$ avec n la longueur entre les articulations de la deuxième bielle 8 ou 10 avec le bâti et le ressort secondaire et m la longueur entre les articulations de la deuxième bielle 8 ou 10 avec le bâti et la première bielle 9 ou 11. L'extrémité du ressort principal liée à la charge étant limité à une ligne verticale, cet effort induit une compression de la bielle BC. Suivant la position du point C, et donc suivant l'inclinaison de la bielle BC par rapport à l'horizontale, cet effort complémentaire est dirigé vers le haut ou vers le bas, ou est nul quand la bielle BC est horizontale.

Le calcul de l'effort complémentaire pour chaque position de C est basé sur la résolution des triangles ABC et APT respectivement, au moyen du théorème de Pythagore généralisé, ou loi des cosinus, procurant les valeurs des angles $\varphi$, $\alpha$ et $\theta$ ainsi que la longueur PT permettant de connaître l'effort $F_s$.

En posant au préalable : $h = \frac{s}{2} - g + x$ et $AC^2 = h^2 + e^2$, on peut écrire les équations suivantes :

$$\varphi = arccos\left(\frac{AC^2 + m^2 - l^2}{2.AC.m}\right) + arctg\left(\frac{h}{e}\right)$$

$$\theta = arcsin\left(\frac{h - msin\varphi}{l}\right)$$

$$PT^2 = n^2 + AP^2 - 2.n.AP.cos(\pi - \varphi - \beta) \text{ avec } \beta = arctg\left(\frac{z}{y}\right)$$

$$\alpha = \beta - arccos\left(\frac{AP^2 + PT^2 - AT^2}{2.AP.PT}\right)$$

et finalement : où :

$$F_s = F_{smax} - K_s(PT - PT_{min})$$

- $F_{smax}$ est la compression maximale du ressort secondaire, correspondant au minimum $PT_{min}$ de la longueur $PT$, c'est-à-dire quand la bielle BC est horizontale.
- $K_s$ est la raideur du ressort secondaire.

L'effort complémentaire vertical vaut donc :

$$F_{sv} = F_s.\frac{n}{m}.cos\alpha.tg\theta$$

enfin, la portance totale du système est obtenue en ajoutant l'effort du ressort principal à l'effort complémentaire ainsi calculé :

$$\boldsymbol{P = F_p + F_{sv}}$$

Exemples :

1 : Compensateur à 3 ressorts en Té (qui ne fait pas partie de l'invention):

En disposant des ressorts du commerce suivant le schéma des figures la-d, il est possible de modéliser le comportement du dispositif. Les ressorts (de compression) choisis pour cet exemple ont les caractéristiques suivantes :

| | | Ressort principal : | | |
|---|---|---|---|---|
| | | Ressort moyen Olma T2 56 90 500 | | |
| | Charge daN | | Flèche mm | | Longueur mm |
| | 1000 | | 250 | Lj | **250** |
| Pc | **800** | Fc | **200** | Lc | 300 |
| Pb | **630** | Fb | **160** | Lb | 340 |
| Pa | **500** | Fa | **125** | La | 375 |
| | 0 | | 0 | L0 | **500** |

| | | Ressorts latéraux | | |
|---|---|---|---|---|
| | | Ressort léger Olma T2bis 56 84 400 | | |
| | Charge daN | | Flèche mm | | Longueur mm |
| | 560 | | 240 | Lj | **160** |
| Pc | **450** | Fc | **190** | Lc | 210 |
| Pb | **360** | Fb | **150** | Lb | 250 |
| Pa | **280** | Fa | **120** | La | 280 |
| | 0 | | 0 | L0 | **400** |

Les indices a, b, et c caractérisent les valeurs à respectivement 50%, 63%, et 80% de la course de chaque ressort. La distance B de la figure 1a est la somme de la longueur minimale $L_{smin}$ d'un ressort secondaire et d'une valeur *E* représentant les embouts et rotules (ici respectivement 177 et 76 mm, soit 253 mm pour *B*).

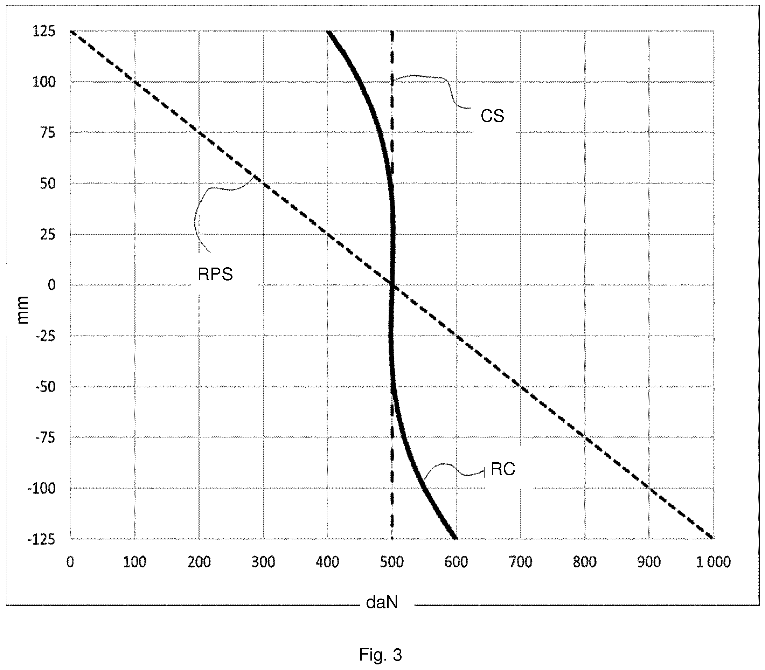

Pour une charge nominale ($Fp_0$, consigne) du ressort principal de 500 daN, correspondant à la moitié de sa flèche, le graphique de la figure 3 montre le comportement du dispositif. La courbe CS représente la consigne, la courbe RPS la réponse avec un seul ressort principal, et la courbe RC la réponse avec la compensation selon les figures 1a-d. Sur une large plage centrale de la course C, soit environ 100 mm, la portance F est quasi constante à environ 500 daN. Aux extrémités de la course, le système présente une petite raideur assurant un rappel élastique minimum d'environ 100 daN. Une application comme filtre antivibratoire, voire antisismique, pourrait s'avérer intéressante.

2 : Compensateur à ressorts et bielles (Figures 2a-d):

En reprenant le même ressort principal que pour l'exemple ci-dessus, et des ressorts latéraux plus légers associés à des bielles articulées de longueur 176 mm suivant la configuration des figures 2a-d, on obtient le comportement suivant :

| | | | ressorts latéraux | | |
|---|---|---|---|---|---|
| | | | Ressort léger Olma T2bis 45 68 250 | | |
| | charge daN | | flèche mm | | longueur mm |
| | 355 | | 150 | Lj | **100** |
| Pc | **280** | Fc | **120** | Lc | 130 |
| Pb | **225** | Fb | **96** | Lb | 154 |
| Pa | **180** | Fa | **76** | La | 174 |
| | 0 | | 0 | L0 | **250** |

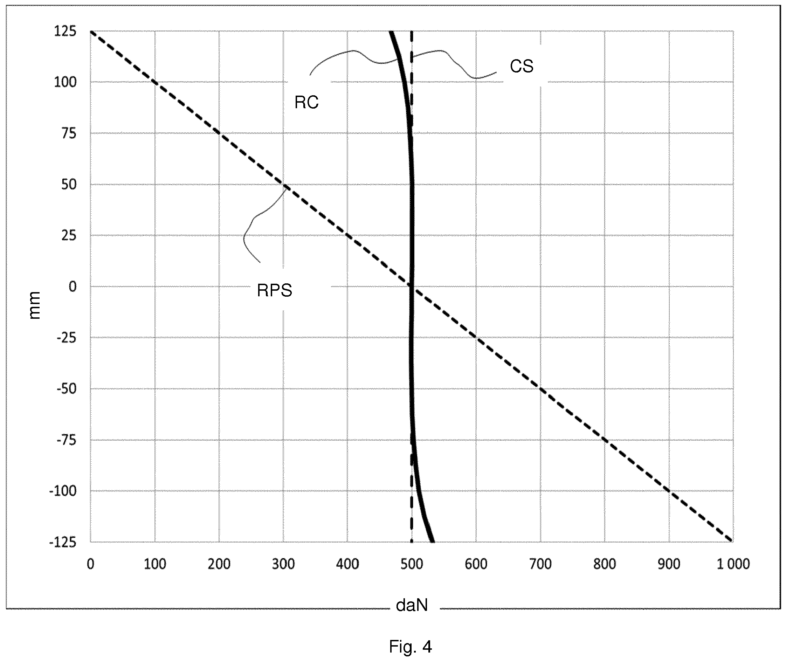

où l'on peut constater un effet amélioré sur la figure 4, puisque le parcours à charge constante F de 500 daN, est passé de 100 (figure 3) à 150 mm.

La compensation « idéale », en revanche, est plus difficile à atteindre à partir des seules caractéristiques des catalogues. Avec des ressorts « sur mesure », il sera possible de s'en approcher plus facilement, à condition en particulier que les valeurs de raideur restent constantes sur toute la course et qu'elles n'évoluent pas dans le temps.

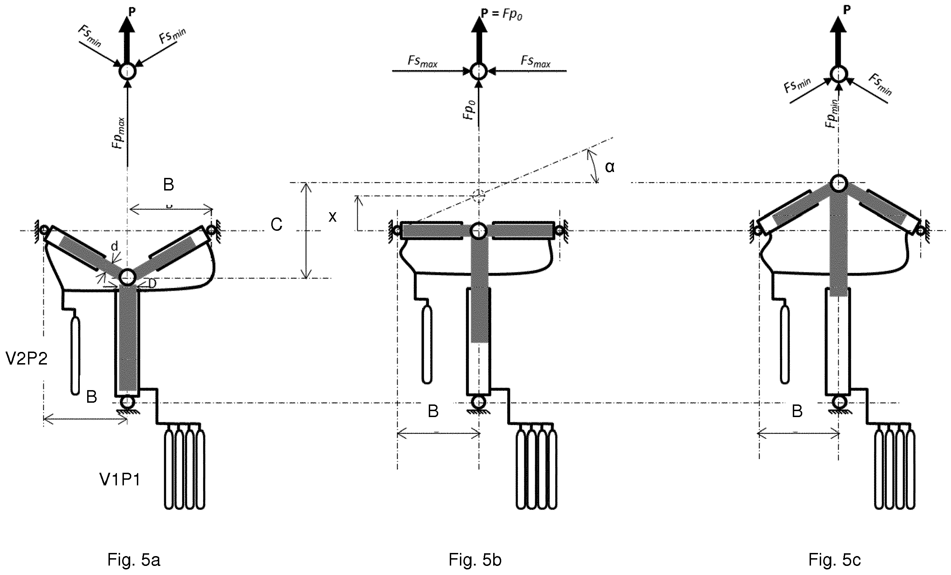

3 : Compensateur à vérins pneumatiques ou hydropneumatiques (figures 5a-c), qui ne fait pas partie de l'invention:

Les ressorts sur catalogue, voire sur mesure, ont l'inconvénient d'être limités à une plage de chargement unique et assez étroite. Les vérins pneumatiques ou hydropneumatiques, en revanche, présentent l'intérêt de pouvoir s'adapter à une charge par un simple ajustement de la pression, et obtenir une raideur en faisant varier le rapport entre la variation de volume dans le vérin et le volume total du gaz auquel le système est raccordé. S'agissant en général d'air comprimé, qui n'est pas tout à fait un gaz parfait, la formule généralement admise pour relier la pression *P* et le volume *V* est :

$$P.V^{\gamma} = Constante$$

Avec pour l'air : $\gamma = 1,4$

La réponse d'un vérin pneumatique ne peut donc pas être linéaire comme celle d'un ressort hélicoïdal. Sa «raideur» varie légèrement le long de la course.

En remplaçant les ressorts des figures 1a-d par de tels vérins, on obtient le schéma des figures 5a-c. Les vérins secondaires ou auxiliaires sont raccordés à un circuit hydraulique $P_2 V_2$, le vérin principal étant raccordé sur un second circuit $P_1 V_1$. Ainsi, les réglages de la pression hydraulique sont indépendants.

L'exemple est fondé sur une application de la compensation d'un pilonnement dû à la houle. Le tableau ci-après indique les dimensions principales de l'installation :

| P (t) | C (m) | B (m) | D (m) | N | S (m²) | d (m) | n | s (m²) | V1 (m³) | V2 (m3) | P1 max (bars) | P2 max (bars) |
|---|---|---|---|---|---|---|---|---|---|---|---|---|
| **454** | 7.62 | 3.81 | 0.400 | 2 | 0.25132 | 0.08 | 4 | 0.02011 | 22.3 | 5.0 | 191 | 175 |

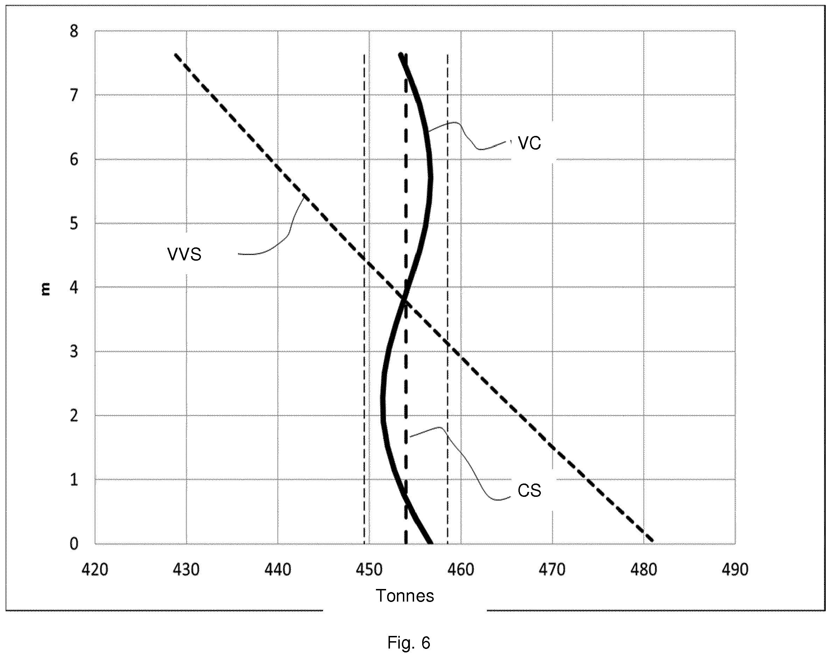

La charge maximum est de 454 tonnes (1 million de livres: 1000 Klbs ou Kips), et la course maximale de 7,62 m (25 ft.) correspond à une longueur classique pour ce type de vérin. Les vérins principaux sont au nombre de 2 (N) et les secondaires 4 (n). Le graphique de la figure 6 montre le comportement du compensateur. La courbe CS représente la consigne, la courbe VVS la réponse avec un seul ressort principal, et la courbe VC la réponse avec la compensation selon les figures 5a-c. La totalité de la course C de 7,62 m est parcourue avec une portance quasi constante à 454 tonnes, la valeur absolue de l'écart maximum étant de **2,623 tonnes,** soit **0,58%** de la valeur de consigne CS.

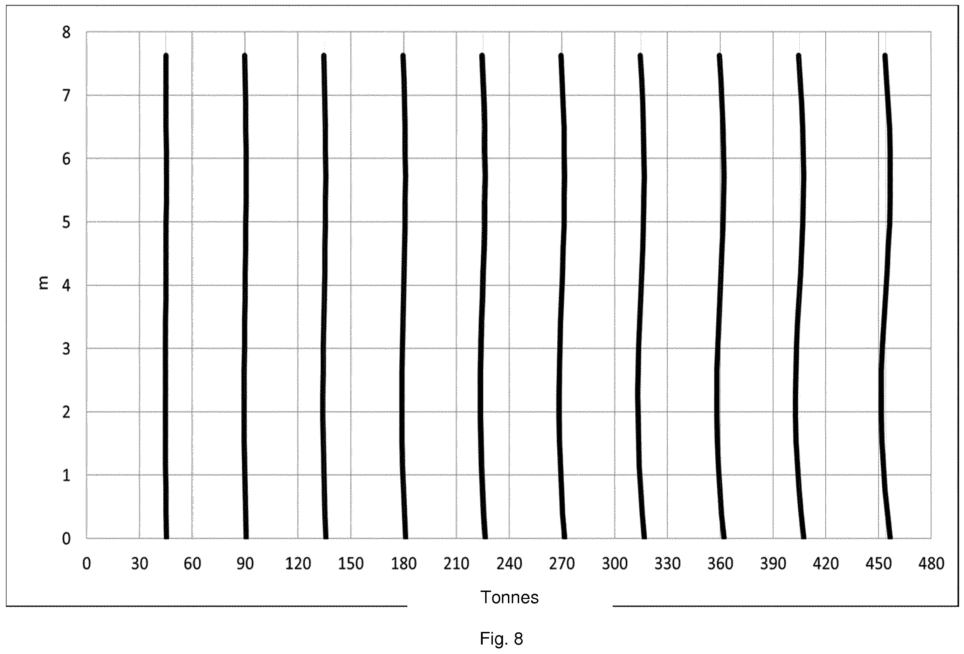

En faisant varier les pressions de chaque circuit, il est possible de compenser le pilonnement pour n'importe quel cas de charge inférieure avec le même matériel, comme récapitulé dans le tableau ci-dessous et le graphique de la figure 8 :

| F tonnes | 45 | 90 | 135 | 180 | 225 | 270 | 315 | 360 | 405 | 454 |
|---|---|---|---|---|---|---|---|---|---|---|
| V1 m3 | 22.3 | 22.3 | 22.3 | 22.3 | 22.3 | 22.3 | 22.3 | 22.3 | 22.3 | 22.3 |
| V2 m3 | 5.0 | 5.0 | 5.0 | 5.0 | 5.0 | 5.0 | 5.0 | 5.0 | 5.0 | 5.0 |
| P1 bars | 18.98 | 38.0 | 56.9 | 75.9 | 94.9 | 113.9 | 132.9 | 151.8 | 170.8 | 191.5 |
| P2 bars | 17.31 | 34.6 | 51.9 | 69.2 | 86.5 | 103.8 | 121.1 | 138.4 | 155.7 | 174.6 |
| erreur maxi T | 0.260 | 0.520 | 0.780 | 1.040 | 1.300 | 1.560 | 1.820 | 2.080 | 2.340 | 2.623 |
| erreur maxi % | 0.58% | 0.58% | 0.58% | 0.58% | 0.58% | 0.58% | 0.58% | 0.58% | 0.58% | 0.58% |

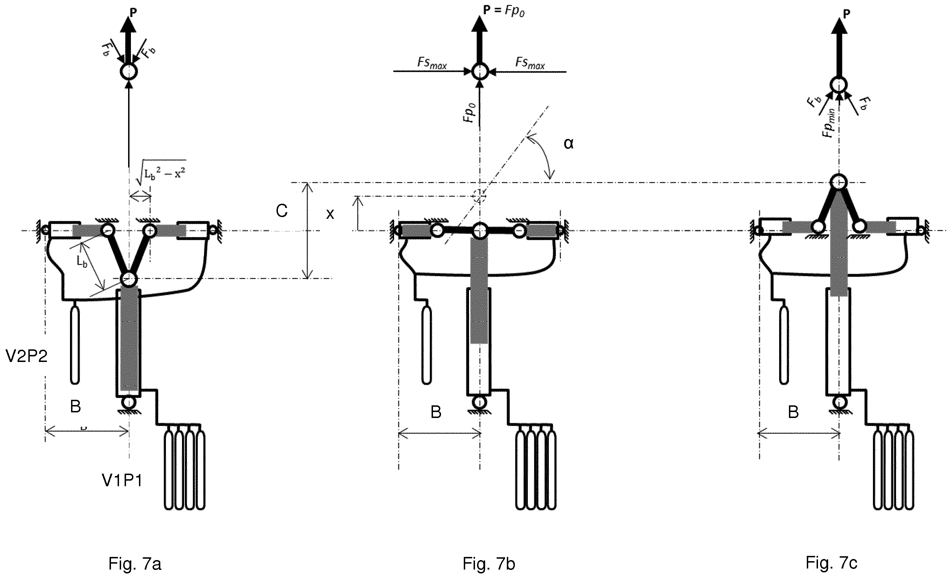

4 : Compensateur à vérins pneumatiques ou hydropneumatiques avec bielles (figures 7a-c) :

En substituant les ressorts des figures 2a-d par des vérins hydropneumatiques, on obtient les schémas des figures 7a-c.

Le cas de charge et la course sont identiques à l'exemple précédent. Le tableau ci-après indique les dimensions principales :

| P (t) | C (m) | Lb (m) | D (m) | N | S (m2) | d (m) | n | s (m2) | V1 (m3) | V2 (m3) | P1$_{max}$ (bars) | P2$_{max}$ (bars) |
|---|---|---|---|---|---|---|---|---|---|---|---|---|
| **454** | 7.62 | 5.497 | 0.386 | 2 | 0.23404 | 0.10 | 4 | 0.03142 | 14.906 | 0.197 | 209.8 | 161.9 |

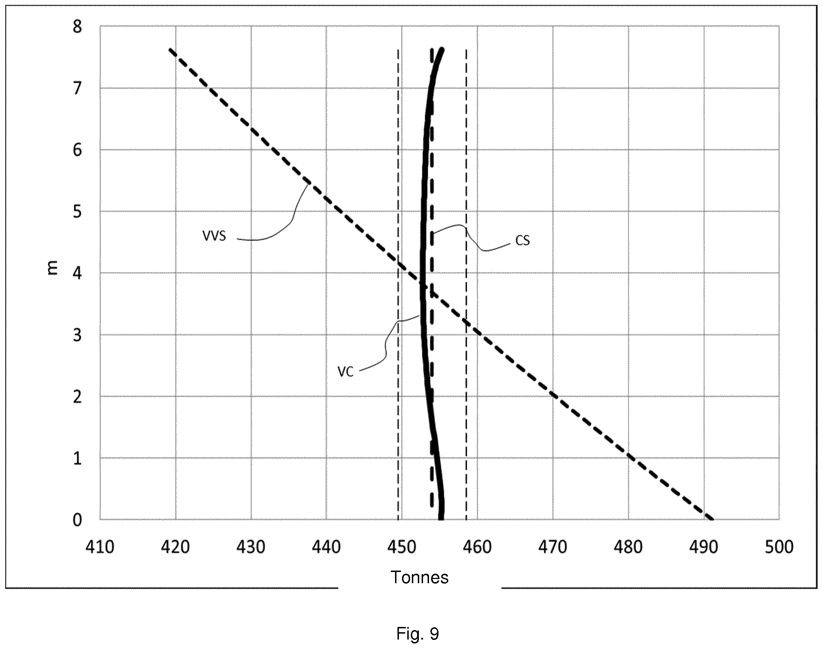

Le diamètre des tiges de vérins principaux a été diminué de 4 mm, et les volumes d'air ont sensiblement diminué de 22,3 à 14,9 m$^3$ pour V1, et de 5,0 à 0,197 m$^3$ pour V2. Le graphique de la figure 9 montre le comportement du compensateur. La courbe CS représente la consigne, la courbe VVS la réponse avec un seul vérin principal, et la courbe VC la réponse avec la compensation selon les figures 7a-c. L'écart maximum est de **1,272 tonnes,** soit **0,28%** de la valeur de la consigne. La compensation théoriquement idéale est très proche, mais elle est de toutes façons illusoire à cause de la non-linéarité de la réponse pneumatique.

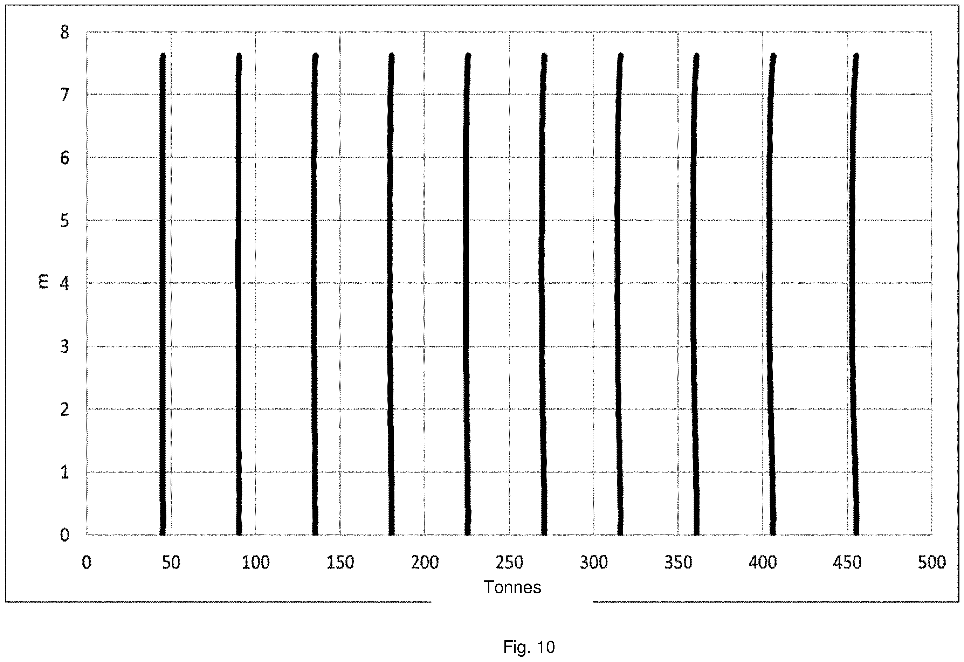

En procédant au même balayage des cas de charge que pour l'exemple précédent, on obtient le tableau récapitulatif ci-après et le graphique de la figure 10 :

| F tonnes | 45 | 90 | 135 | 180 | 225 | 270 | 315 | 360 | 405 | 454 |
|---|---|---|---|---|---|---|---|---|---|---|
| V1 m3 | 14.906 | 14.906 | 14.906 | 14.906 | 14.906 | 14.906 | 14.906 | 14.906 | 14.906 | 14.906 |
| V2 m3 | 0.197 | 0.197 | 0.197 | 0.197 | 0.197 | 0.197 | 0.197 | 0.197 | 0.197 | 0.197 |
| P1 bars | 20.80 | 41.6 | 62.4 | 83.2 | 104.0 | 124.8 | 145.6 | 166.4 | 187.2 | 209.8 |
| P2 bars | 16.05 | 32.1 | 48.2 | 64.2 | 80.3 | 96.3 | 112.4 | 128.4 | 144.5 | 161.9 |
| erreur maxi T | 0.126 | 0.252 | 0.378 | 0.504 | 0.630 | 0.756 | 0.883 | 1.009 | 1.135 | 1.272 |
| erreur maxi % | 0.28% | 0.28% | 0.28% | 0.28% | 0.28% | 0.28% | 0.28% | 0.28% | 0.28% | 0.28% |

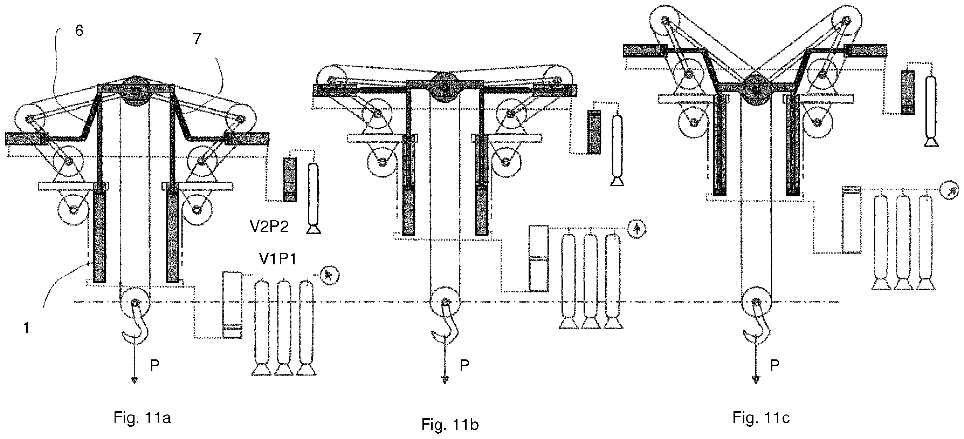

Les figures 11a, 11b et 11c illustrent une application du dispositif selon l'invention à un système de levage de charge, par exemple un appareil de forage supporté par une installation flottante. Les différentes opérations, forage (application d'un poids sur l'outil constant), tension sur le riser, manutention de la tête de puits, requièrent un contrôle du déplacement de la charge P quel que soit le déplacement du support flottant au gré de la houle. L'incorporation du dispositif selon l'invention dans le système de compensateur de pilonnement permet une optimisation du contrôle. La figure 11b montre la position au point milieu de la course, où les vérins secondaires reliés au moufle « fixe » (crown block) par des bielles 6, 7 n'agissent pas en complément des vérins principaux. La figure 11a montre la position du système compensateur en position haute avec l'addition des efforts fournis par les vérins secondaires, par l'intermédiaire des bielles. La figure 11c montre le système en position basse avec la soustraction des efforts fournis par les vérins secondaires, par l'intermédiaires des bielles. Le moufle mobile auquel est suspendue la charge P sensiblement constante, reste pratiquement immobile par rapport au fond compte tenu de la conservation de la longueur du câble, grâce au chemin de câble tel l'art antérieur.

Sur la figure 11a, on note que chacun des systèmes de vérins principaux et secondaires possèdent des moyens indépendants de contrôle statique de la pression (P2V2 et P1V1).

Bien entendu, comme décrit plus haut, l'utilisation de bielles n'est pas systématique, mais facilite grandement l'incorporation d'un système selon l'invention dans un compensateur conventionnel, par exemple celui décrit dans US5520369.

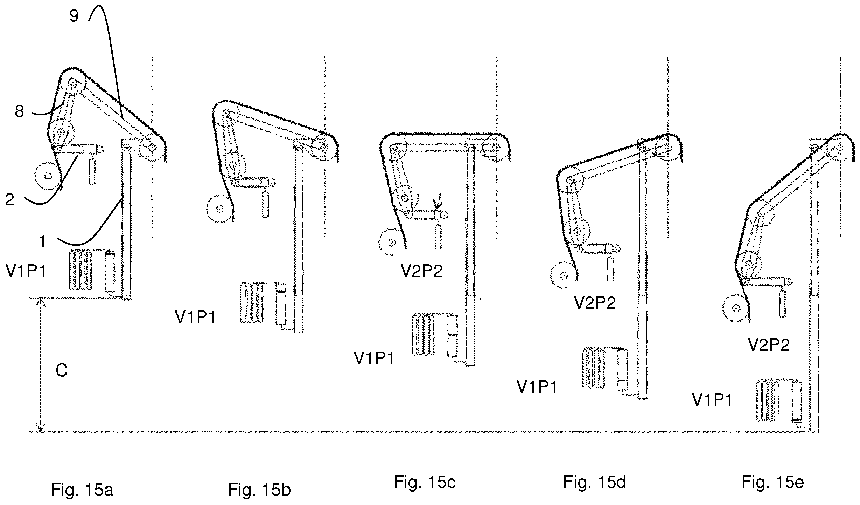

5 : Compensateur à vérins pneumatiques ou hydropneumatiques avec bielles (figures 15a-e) :

L'application de cette quatrième solution aux navires ou plateformes classiques de forage en mer, c'est-à-dire avec treuil à câble et vérins hydropneumatiques agissant sur le moufle «fixe» en tête de mât, peut être réalisée simplement. En effet, le système de barres articulées du compensateur de pilonnement est déjà utilisé pour conserver la longueur du câble au long de la course, par exemple dans un compensateur de pilonnement conventionnel, notamment celui décrit dans US5520369. Les figures 15a à 15e représentent le principe d'une telle réalisation pour une course de 25 ft. (7,62 m) (seuls les circuits hydropneumatiques ne sont pas à l'échelle, et les figures 15a à 15e représentant une moitié de compensateur de pilonnement, l'autre moitié se déduisant par symétrie). Les figures 15a à 15e illustrent le déplacement des vérins principal 1 et secondaire 2 sur la totalité de la course C du moufle supérieur du compensateur de pilonnement.

Le calcul de la portance d'un tel système est analogue au calcul avec des ressorts mécaniques détaillé plus haut, en remplaçant les raideurs $K_p$ et $K_s$ par leurs équivalents pneumatiques calculés en chaque point par la formule « polytropique » $P. \ V^\gamma = constante.$

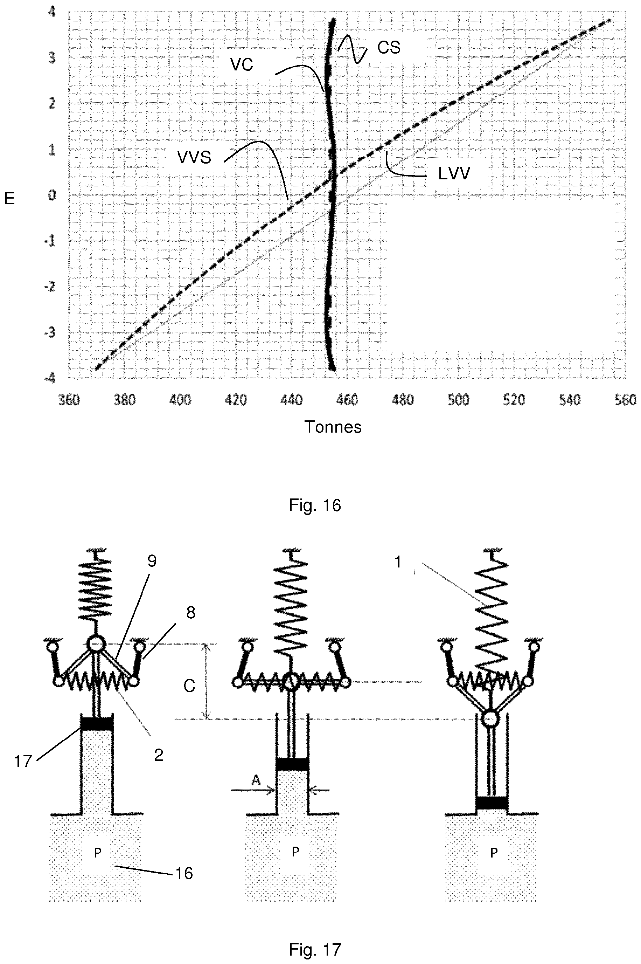

Une optimisation portant sur le cas classique 454 tonnes x 7,62 m (1000 Kpounds x 25 ft.) aboutit au résultat théorique détaillé dans le tableau 1 et le graphique de la figure 16.

Tableau 1 - Données exemple 5

| $F_0$ (t) | s (m) | l (m) | m (m) | n (m) | e (m) | g (m) | D (m) | y (m) | z (m) | β (°) | AP (m) |
|---|---|---|---|---|---|---|---|---|---|---|---|
| 454 | 7,62 | 5,60 | 2,50 | 1,005 | 3,931 | 1,563 | 0,41 | 2,2 | 0,9 | 22,2 | 2,38 |
| NVP | SP (m²) | d (m) | NVA | SA (m²) | V1 (m³) | V2 (m³) | P1 max (bars) | P2 max (bars) | γ air | NP | TC (t) |
| 2 | 0,264 | 0,235 | 4 | 0,173 | 6 | 0,4 | 209.9 | 195.3 | 1,4 | 7 | 32.4 |

avec les notations des figures 14 et 15 et D le diamètre des tiges des vérins principaux, NVP le nombre de vérins principaux, SP la section totale des vérins principaux, d le diamètre des tiges des vérins auxiliaires, NVA le nombre de vérins auxiliaires, SA la section totale des vérins auxiliaires, NP le nombre de poulies du moufle mobile, et TC la tension du câble.

Le graphique de la figure 16 montre le comportement du compensateur. La courbe CS, en trait pointillé, représente la consigne, la courbe VVS la réponse avec seulement les vérins principaux verticaux (V1), la courbe LVV la réponse linéaire (théorique) des vérins principaux verticaux et la courbe VC, en trait continu, la réponse avec la compensation selon les figures 15a-e.

L'écart absolu maximum par rapport à la consigne de poids pendu est de 1,384 tonne, soit 0,305% de la charge. Le dispositif est donc performant si on le compare à l'art antérieur où les meilleurs résultats sont plutôt de l'ordre de 2% ou plus.

L'intérêt principal du dispositif selon ce mode de réalisation réside également dans la réduction du volume total d'air à haute pression nécessaire. Les meilleures réalisations antérieures, nécessitent 15 à 20 m³ d'air à haute pression (210 bars), alors que l'exemple présent se contente de 6 m³ de volume principal (V1) et 400 litres pour le circuit auxiliaire (V2), avec des pressions du même ordre.

De plus, on peut remarquer que la portance des vérins principaux seuls à mi-course est légèrement inférieure à la valeur de consigne. En pratique, cela signifie que les bielles BC ne sont pas horizontales à l'exacte mi-course. Le réglage de la pression maximale P1, effectué au zéro de la course des vérins principaux, n'en est pas affecté. En revanche, le maximum de la pression P2, obtenu en mettant les bielles BC à l'horizontale, est un peu supérieur à la valeur à mi-course (ici d'environ 0,5 bar), considérée comme maximale pour démarrer l'optimisation. Ce détail doit être pris en compte dans le dimensionnement.

Applications

1. Comme évoqué pour les différents exemples illustrés ci-dessus, le système de contrôle du déplacement relatif d'une charge (selon l'une quelconque des variantes de réalisation de l'invention décrites précédemment), appelé également compensateur « isodyne », peut être intégré dans un système de compensation de pilonnement utilisé sur un support flottant. Par exemple, le compensateur isodyne peut être intégré dans un compensateur conventionnel tel que décrit dans US5520369. Deux exemples d'intégration dans un compensateur de pilonnement sont illustrées aux figures 11a-11c et 15a-15e. L'utilisation du compensateur isodyne selon l'invention dans un compensateur de pilonnement permet une optimisation du contrôle passif du déplacement de la charge.

Pour un compensateur de pilonnement, le bâti correspond à l'installation flottante. Pour cette application, le moyen d'amortissement principal peut être constitué d'au moins un, de préférence d'au moins deux, vérins de direction sensiblement parallèle à la direction de la charge (essentiellement verticale). De plus, dans le compensateur de pilonnement, les moyens d'amortissement principal et secondaire peuvent comprendre des vérins hydrauliques. En outre, les moyens d'amortissement principal et secondaire peuvent comprendre des moyens hydropneumatiques indépendants pour régler leur pression hydraulique de façon indépendante.

2. Le système de contrôle du déplacement selon l'invention (compensateur isodyne) peut être également appliqué à un compensateur de pression isobare. En effet, toute enceinte fermée (enveloppe, ballon, tuyauterie, circuit, ...) indéformable contenant un ou des fluides susceptibles de variations de volume (dilatation ou retrait thermique, réaction chimique, ...) doit être protégée contre les variations de pression induites, qui sont d'autant plus fortes que le fluide est peu compressible.

Cette protection consiste le plus souvent à mettre en communication l'enceinte avec un volume de gaz, nettement plus compressible que le fluide considéré et en général isolé de celui-ci par une membrane ou un piston, et à limiter ainsi l'amplitude de la variation de pression pour contenir la dite pression dans les limites admissibles par l'enceinte. Le dispositif, connu sous le nom d'accumulateur de pression, est limité par le volume du gaz, qui constitue lui-même une deuxième enceinte soumise aux mêmes contraintes que l'enceinte principale, et par le fait que ce volume doit être d'autant plus important que l'on veut limiter l'amplitude de la variation de pression. Un accumulateur de pression bien dimensionné constitue une protection contre la destruction de l'enceinte, et permet de conserver le fluide à l'intérieur, mais son encombrement et les obligations règlementaires liées à la pression (contrôles périodiques, ...) en limitent l'emploi, notamment aux cas de fluides chers ou dangereux. Cependant cette protection n'est pas absolue en cas de dilatation incontrôlable (emballement d'une réaction chimique, incendie, ...).

Un autre type de protection généralement utilisé consiste à ouvrir l'enceinte sur l'extérieur au moyen d'un disque de rupture ou d'une soupape, dès que la pression limite est atteinte. Un tel équipement est une protection absolue contre la destruction de l'enceinte, mais le fluide évacué est perdu, et en général la fonction assurée par l'enceinte doit au moins être redémarrée (cas d'un réacteur chimique). Ce type de protection est donc préférable pour les fluides peu chers (eau, air, ...) et pour les cas où l'arrêt temporaire avant redémarrage n'est pas trop pénalisant.

L'application de l'invention à la protection des enceintes fermées contenant un ou des fluides susceptibles de variations de volume peut être réalisée assez simplement suivant le schéma de la figure 17. Un cylindre de section A est connecté à une enceinte 16 remplie d'un fluide à la pression P. Un piston 17 étanche coulissant dans le cylindre sur une longueur sépare le fluide à l'intérieur de l'enceinte de l'espace extérieur. Un compensateur isodyne selon l'invention relie le dit piston 17 à un bâti fixe par rapport à l'enceinte 16. Le compensateur isodyne peut être formé selon la troisième solution illustrée aux figures 12, c'est-à-dire avec un ressort principal 1, un ressort secondaire 2, le ressort secondaire 2 étant lié au ressort principal 1 au moyen d'un système articulé comprenant deux bielles 8 et 9. Ainsi l'effort exercé sur le piston par le compensateur isodyne étant quasi constant, la pression P régnant à l'intérieur de l'enceinte ne sera que très peu affectée par les variations de volume du fluide intérieur provocant le déplacement du piston dans un sens ou dans l'autre. Un tel compensateur peut en outre être équipé d'un capteur de position du piston, permettant de détecter toute variation de volume du fluide intérieur. Une telle détection permet par exemple, sans changement des conditions de pression, de mieux contrôler l'évolution d'une réaction chimique à l'intérieur de l'enceinte, ou de mettre en évidence une perte ou un gain de fluide à très petit débit.

Enfin, ce dispositif peut également être utilisé comme amortisseur de pulsations, par exemple sur une pompe à pistons, ou encore comme accumulateur temporaire d'énergie mécanique. Pour cette dernière utilisation, l'énergie stockée est le produit du déplacement du piston par la force, constante, délivrée par l'équipement. L'avantage est de disposer de la même force tout au long de la course du piston, ce qui permet par exemple d'actionner un moteur hydraulique avec une pression d'huile indépendante du niveau de «remplissage» de l'accumulateur. De la même manière, si l'on utilise le même moteur hydraulique (réversible) comme pompe, le remplissage se fait également à pression constante. L'équipement optimisé pour une pression unique a ainsi un rendement maximum sur toute la plage d'utilisation, et la puissance instantanée, en stockage et en puisage, ne dépend théoriquement que du débit d'huile possible. Une application envisageable est la récupération de l'énergie de freinage d'un véhicule, où la capacité de puissance instantanée disponible est plus importante que la quantité totale d'énergie elle-même.

3. Le système de contrôle de déplacement d'une charge selon l'invention (le compensateur « isodyne ») peut être en outre utilisé dans un système de suspension d'un véhicule. En effet, une masse M suspendue à un support par une liaison déformable (suspension) réagit aux impulsions ou oscillations du support suivant deux caractéristiques principales de la suspension : la raideur K qui détermine l'effort exercé en fonction de l'amplitude de la déformation, et le coefficient d'amortissement C qui détermine un effort supplémentaire fonction de la vitesse de la déformation.

$$f = \frac{1}{2\pi}\sqrt{\frac{K}{M}}$$

M et K définissent la fréquence propre, ou fréquence de résonnance, du système, qui s'écrit :

La fonction essentielle d'une suspension étant de filtrer les oscillations du support, on choisit une valeur minimale pour K, de sorte que la fréquence propre soit la plus inférieure possible aux fréquences attendues pour les dites oscillations. Cependant, K doit être suffisant pour éviter que la suspension arrive en butée, par exemple en cas d'efforts dynamiques importants ajoutés. Comme il n'est en général pas possible de modifier K (ressort hélicoïdal, bloc de caoutchouc, ...), la valeur choisie est un compromis entre des contraintes divergentes, et l'adaptation de la majorité des suspensions aux différentes conditions de sollicitation du support (fréquence, effets dynamiques, ...) n'est réalisée qu'en jouant sur le coefficient d'amortissement, qu'il est relativement facile de moduler en utilisant des circuits hydrauliques où l'on force un fluide à passer par des orifices de sections variables.

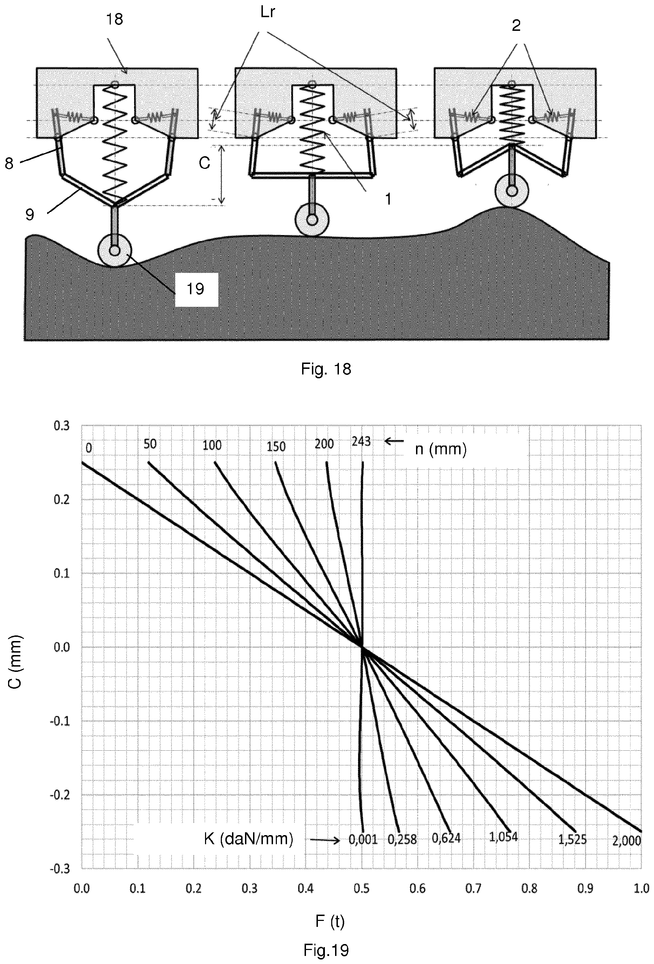

Le principe de l'invention permet assez facilement d'ajuster de manière continue la raideur désirée pour toute la course (débattement) d'une suspension. La figure 18 illustre une suspension de véhicule comprenant un compensateur isodyne selon la quatrième solution illustrée aux figures 13a-13d. Le compensateur isodyne est disposé entre la roue 19 et le bâti du véhicule 18, par exemple le châssis du véhicule. Si l'on se réfère à la figure 19, on voit qu'il est possible de moduler la compression de la bielle 9, et donc la réponse élastique globale de la suspension, en faisant simplement varier la longueur du levier de la bielle 8 de la valeur zéro (aucune compensation) à une valeur maximale (compensation isodyne). Un résultat équivalent peut être obtenu en modifiant le bras de levier et/ou la course et donc la plage d'efforts possibles du ressort secondaire 2, par exemple au moyen de la longueur réglable Lr de la bielle 8.

La figure 19 illustre plusieurs courbes représentant la variation de la course C en fonction de la portance F en tonnes, pour différentes raideurs K. A chaque raideur K est associée une valeur de la longueur du levier n (cf. figure 14). Ces courbes correspondent à une masse suspendue de 0,5 tonne et un débattement de 500 mm. Selon cet exemple, la raideur d'un tel dispositif peut être réglée entre 2 daN/mm (ressort principal seul) et 0,001 daN/mm, soit environ 1 gramme/mm (suspension isodyne). On remarque que seule la courbe correspondant à la raideur maximale est une droite. La légère distorsion des autres courbes est due à la géométrie du système à barres articulées qui ne peut approcher l'équilibre de la solution initiale avec guides transversaux des pieds de bielles.

D'autres réglages sont possibles, notamment la distance séparant le pivot A du minimum de la course du ressort principal. L'effet porte alors sur la valeur de la portance autour de laquelle on pourra faire varier la raideur. Il est possible, jusqu'à certaines limites, d'adapter la suspension à une variation d'environ ± 30% de la valeur médiane.

## Revendications

1. Système de contrôle du déplacement relatif d'une charge P comportant au moins un moyen d'amortissement principal (1) d'action longitudinale de course C de déplacement, et ayant deux extrémités, l'une étant liée à un bâti et l'autre étant liée à la charge, comprenant un dispositif de compensation comportant au moins un moyen d'amortissement secondaire (3, 2) d'action longitudinale ayant deux extrémités dont l'une est solidaire dudit bâti et l'autre est liée à l'extrémité du moyen d'amortissement principal liée à la charge, en ce que, ledit moyen d'amortissement secondaire est disposé de façon à ce qu'en un point de la course C, le moyen d'amortissement secondaire a une action de direction orthogonale à la direction dudit déplacement et **caractérisé en ce que** l'une des extrémités du moyen d'amortissement secondaire d'action longitudinale est liée à l'extrémité du moyen d'amortissement principal liée à la charge par l'intermédiaire d'un système articulé.

2. Système selon la revendication 1, dans lequel lesdits moyens d'amortissement d'action longitudinale sont du type vérin à ressort, hydraulique, ou pneumatique, ou une combinaison.

**3.** Système selon la revendication 2 dans lequel la course C correspond au plus à la longueur de la tige dudit vérin.

**4.** Système selon l'une des revendications précédentes, dans lequel au moins deux moyens d'amortissement secondaire sont disposés symétriquement par rapport à l'axe dudit moyen d'amortissement principal, de façon à ce que leurs actions s'annulent lorsqu'ils sont orthogonaux à l'axe du déplacement.

**5.** Système selon l'une des revendications précédentes, dans lequel ledit point d'orthogonalité est sensiblement au milieu de la course C.

**6.** Système selon l'une des revendications précédentes , dans lequel le système articulé comporte une bielle (6, 7).

**7.** Système selon l'une des revendications précédentes, dans lequel le système articulé comporte une première bielle (9, 11) dont une première extrémité est fixée à l'extrémité du moyen d'amortissement principal (1) liée à la charge, et une deuxième bielle (8, 10) comportant une première extrémité articulée par rapport à une deuxième extrémité de la première bielle (9, 11) et une deuxième extrémité articulée par rapport au bâti, l'articulation entre la première bielle (9, 11) et la deuxième bielle (8, 10) étant fixée à l'extrémité du moyen d'amortissement secondaire (2, 3) liée au moyen d'amortissement principal (1).

**8.** Système selon l'une des revendications précédentes, dans lequel le système articulé comporte une première bielle (9, 11) dont une première extrémité est fixée à l'extrémité du moyen d'amortissement principal (1) liée à la charge, et une deuxième bielle (8, 10) comportant une première extrémité articulée par rapport à une deuxième extrémité de la première bielle (9, 11), une articulation (13, 15) par rapport au bâti, et une deuxième extrémité fixée à l'extrémité du moyen d'amortissement secondaire (2, 3) liée au moyen d'amortissement principal (1).

**9.** Système selon l'une des revendications précédentes, dans lequel le déplacement longitudinal du moyen d'amortissement secondaire se fait dans une direction fixe par rapport à la direction du déplacement du moyen d'amortissement principal.

**10.** Compensateur de pilonnement d'un support flottant, **caractérisé en ce qu'**il comporte un système de contrôle de déplacement de la charge selon l'une des revendications précédentes.

**11.** Compensateur selon la revendication 10, dans lequel ledit moyen d'amortissement principal est constitué d'au moins deux vérins de direction sensiblement parallèle à la direction de la charge.

**12.** Compensateur selon l'une des revendication 10 ou 11, dans lequel les moyens d'amortissement principal et secondaire sont constitués de vérins hydrauliques.

**13.** Compensateur selon la revendication 12, dans lequel les moyens d'amortissement principal et secondaire comportent des moyens hydropneumatiques indépendants pour régler leur pression hydraulique de façon indépendante.

**14.** Compensateur de dilatation isobare pour une enceinte (16) comprenant un volume de fluide, le compensateur comprenant un piston (17) dans un cylindre de l'enceinte (16), **caractérisé en ce que** le piston (17) est relié au bâti par un système selon l'une des revendications 1 à 9.

**15.** Suspension pour véhicule terrestre comprenant au moins un système selon l'une des revendications 1 à 9 reliant une roue (19) du véhicule et le bâti (18) du véhicule.

**Patentansprüche**

**1.** System zur Kontrolle der relativen Verlagerung einer Last P, umfassend mindestens ein Hauptdämpfungsmittel (1) mit Längswirkung mit einem Verlagerungsweg C und mit zwei Enden, wobei eines mit einem Gehäuse und das andere mit der Last verbunden ist, umfassend eine Ausgleichsvorrichtung, umfassend mindestens ein Hilfsdämpfungsmittel (3, 2) mit Längswirkung mit zwei Enden, von denen eines mit dem Gehäuse verbunden ist und das andere mit dem mit der Last verbundenen Ende des Hauptdämpfungsmittels verbunden ist, wobei das Hilfsdämpfungsmittel derart angeordnet ist, dass an einem Punkt des Weges C das Hilfsdämpfungsmittel eine Wirkung von orthogonaler Richtung zur Richtung der Verlagerung hat, und **dadurch gekennzeichnet, dass** eines der Enden des Hilfsdämpfungsmittels mit Längswirkung mit dem mit der Last verbundenen Ende des Hauptdämpfungsmittels mit Hilfe eines Gelenksystems verbunden ist.

2. System nach Anspruch 1, bei dem die Dämpfungsmittel mit Längswirkung vom Typ hydraulische oder pneumatischer Federzylinder oder eine Kombination sind.

3. System nach Anspruch 2, bei dem der Weg C höchstens der Länge der Stange des Zylinders entspricht.

4. System nach einem der vorhergehenden Ansprüche, bei dem mindestens zwei Hilfsdämpfungsmittel symmetrisch zur Achse des Hauptdämpfungsmittels angeordnet sind, so dass sich ihre Wirkungen aufheben, wenn sie orthogonal zur Achse der Verlagerung sind.

5. System nach einem der vorhergehenden Ansprüche, bei dem der Orthogonalitätspunkt im Wesentlichen in der Mitte des Weges C liegt.

6. System nach einem der vorhergehenden Ansprüche, bei dem das Gelenksystem eine Stange (6, 7) umfasst.

7. System nach einem der vorhergehenden Ansprüche, bei dem das Gelenksystem eine erste Stange (9, 11), deren erstes Ende an dem mit der Last verbundenen Ende des Hauptdämpfungsmittels (1) befestigt ist, und eine zweite Stange (8, 10) umfasst, umfassend ein erstes gelenkiges Ende in Bezug zu einem zweiten Ende der ersten Stange (9, 11) und ein zweites gelenkiges Ende in Bezug zum Gehäuse, wobei das Gelenk zwischen der ersten Stange (9, 11) und der zweiten Stange (8, 10) am Ende des Hilfsdämpfungsmittels (2, 3), das mit dem Hauptdämpfungsmittel (1) verbunden ist, befestigt ist.

8. System nach einem der vorhergehenden Ansprüche, bei dem das Gelenksystem eine erste Stange (9, 11), deren erstes Ende an dem mit der Last verbundenen Ende des Hauptdämpfungsmittels (1) befestigt ist, und eine zweite Stange (8, 10) umfasst, umfassend ein erstes gelenkiges Ende in Bezug zu einem zweiten Ende der ersten Stange (9, 11), ein Gelenk (13, 15) in Bezug zum Gehäuse und ein zweites Ende, das an dem Ende des Hilfsdämpfungsmittels (2, 3), das mit dem Hauptdämpfungsmittel (1) verbunden ist, befestigt ist.

9. System nach einem der vorhergehenden Ansprüche, bei dem die Längsverlagerung des Hilfsdämpfungsmittels in eine feste Richtung in Bezug zur Richtung der Verlagerung des Hauptdämpfungsmittels erfolgt.

10. Dünungskompensator eines schwimmenden Trägers, **dadurch gekennzeichnet, dass** der ein System zur Kontrolle einer Verlagerung der Last nach einem der vorhergehenden Ansprüche umfasst.

11. Kompensator nach Anspruch 10, bei dem das Hauptdämpfungsmittel von mindestens zwei Zylindern von im Wesentlichen paralleler Richtung zur Richtung der Last gebildet ist.

12. Kompensator nach einem der Ansprüche 10 oder 11, bei dem die Haupt- und Hilfsdämpfungsmittel von Hydraulikzylindern gebildet sind.

13. Kompensator nach Anspruch 12, bei dem die Haupt- und Hilfsdämpfungsmittel unabhängige hydropneumatische Mittel umfassen, um ihren Hydraulikdruck unabhängig zu regeln.

14. Isobarer Dehnungskompensator für einen Raum (16), umfassend ein Fluidvolumen, wobei der Kompensator einen Kolben (17) in einem Zylinder des Raums (16) umfasst, **dadurch gekennzeichnet, dass** der Kolben (17) mit dem Gehäuse durch ein System nach einem der Ansprüche 1 bis 9 verbunden ist.

15. Aufhängung für ein Landfahrzeug, umfassend mindestens ein System nach einem der Ansprüche 1 bis 9, das ein Rad (19) des Fahrzeugs mit dem Gehäuse (18) des Fahrzeugs verbindet.

**Claims**

1. System for controlling the relative movement of a load P comprising at least one main damping means (1) of longitudinal action of displacement travel C, and having two ends, one being connected to a structure and the other being connected to the load, comprising a compensation device comprising at least a secondary damping means (3, 2) of longitudinal action having two ends, one of which is secured to the said structure and the other of which is connected to the end of the main damping means that is connected to the load, in that the said secondary damping means is arranged in such a way that, at one point of the travel C, the secondary damping means has an action in a direction orthogonal to the direction of the said movement, and **characterized in that** one of the ends of the secondary damping means of longitudinal action is connected to the end of the main damping means that is connected to the load via an articulated system.

2. System according to Claim 1, in which the said damping means of longitudinal action are of the spring-loaded, hydraulic or pneumatic actuating cylinder type, or a combination thereof.

3. System according to Claim 2, in which the travel C corresponds at most to the length of the rod of the said actuating cylinder.

4. System according to one of the preceding claims, in which at least two secondary damping means are positioned symmetrically with respect to the axis of the said main damping means so that their actions cancel out one another when they are orthogonal to the axis of the movement.

5. System according to one of the preceding claims, in which the said point of orthogonality is substantially in the middle of the travel C.

6. System according to one of the preceding claims, in which the articulated system comprises a link rod (6, 7).

7. System according to one of the preceding claims, in which the articulated system comprises a first link rod (9, 11), a first end of which is fixed to the end of the main damping means (1) that is connected to the load, and a second link rod (8, 10) comprising a first end articulated with respect to a second end of the first link rod (9, 11) and a second end articulated with respect to the structure, the articulation between the first link rod (9, 11) and the second link rod (8, 10) being fixed to the end of the secondary damping means (2, 3) that is connected to the main damping means (1).

8. System according to one of the preceding claims, in which the articulated system comprises a first link rod (9, 11), a first end of which is fixed to the end of the main damping means (1) that is connected to the load, and a second link rod (8, 10) comprising a first end articulated with respect to a second end of the first link rod (9, 11), an articulation (13, 15) with respect to the structure, and a second end that is fixed to the end of the secondary damping means (2, 3) that is connected to the main damping means (1).

9. System according to one of the preceding claims, in which the longitudinal movement of the secondary damping means is in a direction that is fixed with respect to the direction of the movement of the main damping means.

10. Compensator for the heaving movement of a floating support, **characterized in that** it comprises a system for controlling the movement of the load according to one of the preceding claims.

11. Compensator according to Claim 10, in which the said main damping means is made up of at least two actuating cylinders of direction substantially parallel to the direction of the load.

12. Compensator according to either of Claims 10 and 11, in which the main and secondary damping means are made up of hydraulic actuating cylinders.

13. Compensator according to Claim 12, in which the main and secondary damping means comprise independent hydropneumatic means for regulating their hydraulic pressure independently.

14. Isobaric expansion compensator for a space (16) comprising a volume of fluid, the compensator comprising a piston (17) in a cylinder of the space (16), **characterized in that** the piston (17) is connected to the structure by a system according to one of Claims 1 to 9.

15. Land vehicle suspension comprising at least one system according to one of Claims 1 to 9 connecting a wheel (19) of the vehicle and the structure (18) of the vehicle.

Fig. 1a

Fig. 1b

Fig. 1c

Fig. 1d

Fig. 2d     Fig. 2c     Fig. 2b     Fig. 2a

Fig. 3

Fig. 4

Fig. 5a

Fig. 5b

Fig. 5c

Fig. 6

Fig. 7a

Fig. 7b

Fig. 7c

Fig. 8

Fig. 9

Fig. 10

Fig. 11a

Fig. 11b

Fig. 11c

V1P1

V2P2

Fig. 12a

Fig. 12b

Fig. 12c

Fig. 12d

Fig. 13a

Fig. 13b

Fig. 13c

Fig. 13d

Fig. 14

Fig. 15a          Fig. 15b          Fig. 15c          Fig. 15d          Fig. 15e

Fig. 16

Fig. 17

Fig. 18

Fig.19

**EP 3 194 320 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5520369 A
- FR 2575452
- FR 2025186 A1